## Europäisches Patentamt

## European Patent Office

## Office européen des brevets

(19)

(11) Veröffentlichungsnummer: **0 044 921**

**A1**

(12) # EUROPÄISCHE PATENTANMELDUNG

(21) Anmeldenummer: **81104303.3**

(51) Int. Cl.³: **H 02 G 7/08**

(22) Anmeldetag: **04.06.81**

(30) Priorität: **24.07.80 DE 3028037**

(71) Anmelder: **Felten & Guilleaume Carlswerk Aktiengesellschaft, Schanzenstrasse 24 Postfach 80 50 01, D-5000 Köln 80 (DE)**

(43) Veröffentlichungstag der Anmeldung: **03.02.82 Patentblatt 82/5**

(72) Erfinder: **Herff, Robert, Ing.grad., Römerstrasse 30, D-5000 Köln 50 (DE)**

(84) Benannte Vertragsstaaten: **AT FR GB NL**

(54) **Aufhängung für ein Luftkabel an einem Freileitungsseil.**

(57) Die Erfindung bezieht sich auf die Aufhängung eines Luftkabels (5) an einem an Tragmasten befestigten Seil (1) einer Freileitung, an dem das Luftkabel girlandenartig aufgehängt ist. Die Aufgabe bestand darin, eine Aufhängung für Nachrichtenkabel, insbesondere für optische Kabel für die Nachrüstung von Freileitungen zu schaffen, die eine möglichst einfache Montage ermöglicht und das Nachrichtenkabel weitgehend vor mechanischen und thermischen Beanspruchungen schützt. Die Lösung besteht im wesentlichen in der formschlüssigen Anordnung einer längsgeteilten, das Seil umschließenden Gleiteinlage (3) in einem das tragende Seil umfassenden Teil eines U-förmigen Bügels (2), in einer Trageklemme (4) für das Luftkabel mit U-förmigem Querschnitt, die mit Klemmbändern (6) am Luftkabel (5) befestigt ist und in der Anformung zweier bolzenförmiger Ansätze (7) in der Mitte der Längsseiten der Trageklemme, die in entsprechende Löcher in den Schenkeln des Bügels eingreifen. Die Erfindung wird hauptsächlich angewandt bei der nachträglichen Montage von Nachrichtenkabeln an bestehenden Hochspannungs-Freileitungen.

Fl 4571 1 14.07.80

## Aufhängung für ein Luftkabel an einem Freileitungsseil

Die Erfindung betrifft eine Aufhängung eines Luftkabels an
einem an Tragmasten befestigten Seil einer Freileitung, an dem
das Luftkabel girlandenartig aufgehänt ist, mit einem das
tragende Seil U-förmig umfassenden einteiligen Bügel, in dessen
Schenkeln eine Trageklemme für das Luftkabel schwenkbar gelagert
ist.

Der ständige Ausbau der Energieversorgung und ihre Automatisierung
macht es häufig erforderlich, parallel zu einer Energieübertragungs-Freileitung eine oder mehrere Nachrichtenkabel zu verlegen. Für diesen Zweck eignen sich besonders metallfreie Kabel,
bei denen die Nachrichtenübertragung über Lichtleitfasern erfolgt.
Derartige Kabel können ohne besondere Schwierigkeiten nachträglich an bereits vorhandenen Freileitungsseilen aufgehängt werden,
da sie als elektrische Nichtleiter keine zusätzlichen Anforderungen
bezüglich der elektrischen Isolierung stellen.

Bekannt ist bereits die Aufhängung eines Luftkabels an einem an
Tragmasten befestigten Erdseil einer Freileitung als Tragseil,
an dem das Luftkabel girlandenartig befestigt ist, bei der das
Luftkabel an jeder Befestigungsstelle mittels zweier durch einen
Bügel verbundener Klemmen unmittelbar am Erdseil angehängt und
die an dem Luftkabel befestigte Klemme um einen senkrecht zum
Erdseil und zum Luftkabel stehenden Bolzen schwenkbar an der am Erdseil befestigten Klemme gelagert ist. In einer Ausgestaltung
dieser Aufhängung ist der unabhängig von den Klemmen und einstückig ausgebildete U-förmige Bügel mit seinen beiden Schenkeln
auf dem Bolzen schwenkbar gelagert und umgreift einen mittleren
Teil kleineren Durchmessers der am Erdseil befestigten Klemme
lose (DE-PS 21 08 227).

Die bekannte, vorwiegend aus Metall gefertigte Aufhängung für
vorwiegend metallbewehrte Luftkabel besteht aus mehreren, durch
Schrauben miteinander zu verbindenden Teilen und setzt voraus,
daß das tragende Erdseil an allen Aufhängepunkten des Luftkabels
zugänglich ist. Die Montage eines Luftkabels unter Verwendung
der bekannten Aufhängung ist somit zeit- und kosten-aufwendig.

Bekannt sind auch Verfahren und Vorrichtungen, mit denen eine
oder mehrere parallel zu einem Tragseil verlaufende Leitungen
durch eine gemeinsame Umwicklung mit Draht oder Band am Tragseil befestigt werden sollen und die von einem Tragemast zum
anderen gezogen werden, um aufwendige Gerüstbauten zu vermeiden.
Als Beispiel sei eine durchlaufend arbeitende Drahtbindevorrichtung für Gruppen von mit Tragseilen aus Stahl zu verbindende
Luftkabel genannt, die einen Rahmen umfaßt, der mit Nutrollen
ausgerüstet ist, auf denen dieser gleiten kann, während er auf
dem Tragseil der Kabelgruppe ruht, bei der von einem Ende dieses
Rahmens ein zylinderförmiger Hohlkörper ausgeht, dessen Achse
parallel zur Achse des Tragseils verläuft und der seitlich geöffnet ist, um die Einführung des Tragseils und der anderen
Kabel zu ermöglichen, denen dieser als Führung dient, wobei
außerhalb dieses zylinderförmigen Hohlkörpers ein zweiter
zylinderförmiger Hohlkörper am Rahmen befestigt ist, der ein
abnehmbares Teil besitzt und der radial einen oder mehrere
Ausleger trägt, von denen jeder eine lose montierte Drahtwickelrolle trägt, deren Achsen senkrecht zum Halteseil verlaufen, wobei dieser zweite zylinderförmige Körper an das Halteseil drückt,
wodurch sich dieser dreht, wenn der Rahmen am Halteseil entlang
bewegt wird (DE-OS 2 230 032).

Eine derartig feste Verbindung eines Nachrichtenkabels mit
einem Freileitungsseil, insbesondere mit einem stromführenden
Phasenseil, hat aber den **Nachteil**, daß das Nachrichtenkabel
den erheblichen Temperaturschwankungen eines solchen Leiterseils ausgesetzt ist.

Der Erfindung liegt die Aufgabe zugrunde, eine Aufhängung für
Nachrichtenkabel, insbesondere für optische Kabel für die Nachrüstung von Freileitungen zu schaffen, die eine möglichst einfache Montage ermöglicht und das Nachrichtenkabel weitgehend
vor mechanischen und thermischen Beanspruchungen schützt.

Diese Aufgabe wird erfindungsgemäß durch eine Aufhängung der
beschriebenen Art gelöst, bei der innerhalb des das tragende
Seil umfassenden Teils des U-förmigen Bügels eine längsgeteilte, das Seil umschließende Gleiteinlage förmschlüssig angeordnet ist, bei der die Trageklemme für das Luftkabel U-
förmigen Querschnitt hat und mit Klemmbändern am Luftkabel befestigt ist und bei der in der Mitte der Längsseiten der Trageklemme zwei bolzenförmige Ansätze angeformt sind, die in entsprechende Löcher in den Schenkeln des Bügels eingreifen. In
Ausgestaltungen der Erfindung bestehen alle Teile der Aufhängung
aus wetter- und strahlungs-beständigem Kunststoff und die Gleiteinlage aus Tetrafluorkohlenstoff.

Die mit der Erfindung erzielbaren Vorteile bestehen insbesondere
darin, daß die Montage der Aufhängung und ihre Verbindung mit
dem Nachrichtenkabel und dem Trageseil unmittelbar am Mast oder
von einer Masttraverse aus erfolgen kann, wonach das Nachrichtenkabel über ein Zugseil zum nächsten Mast gezogen werden kann und
eine beliebige Anzahl von mit dem Tragseil verbundenen Aufhängungen
längs des Tragseils mit sich zieht. Das ergibt eine zeit- und
kosten-günstige Montage ohne aufwendige Gerüstbauten zwischen den
Masten. Die Ausführung der Aufhängung aus Kunststoff isoliert das
in einem beliebigen Abstand vom Leiterseil verlaufende Nachrichten-

kabel weitgehend gegen Temperaturschwankungen des Leiterseils.
Mechanische Beanspruchungen des Nachrichtenkabels werden durch
die gleitfähige und schwenkbare Aufhängung weitgehend vermieden.

Ein Ausführungsbeispiel der Erfindung ist in der Zeichnung dargestellt und wird im folgenden näher beschrieben. Es zeigen:

Fig. 1   eine Aufhängung in der Seitenansicht, teilweise geschnitten,
Fig. 2   die gleiche Aufhängung, parallel zur Seilachse gesehen.

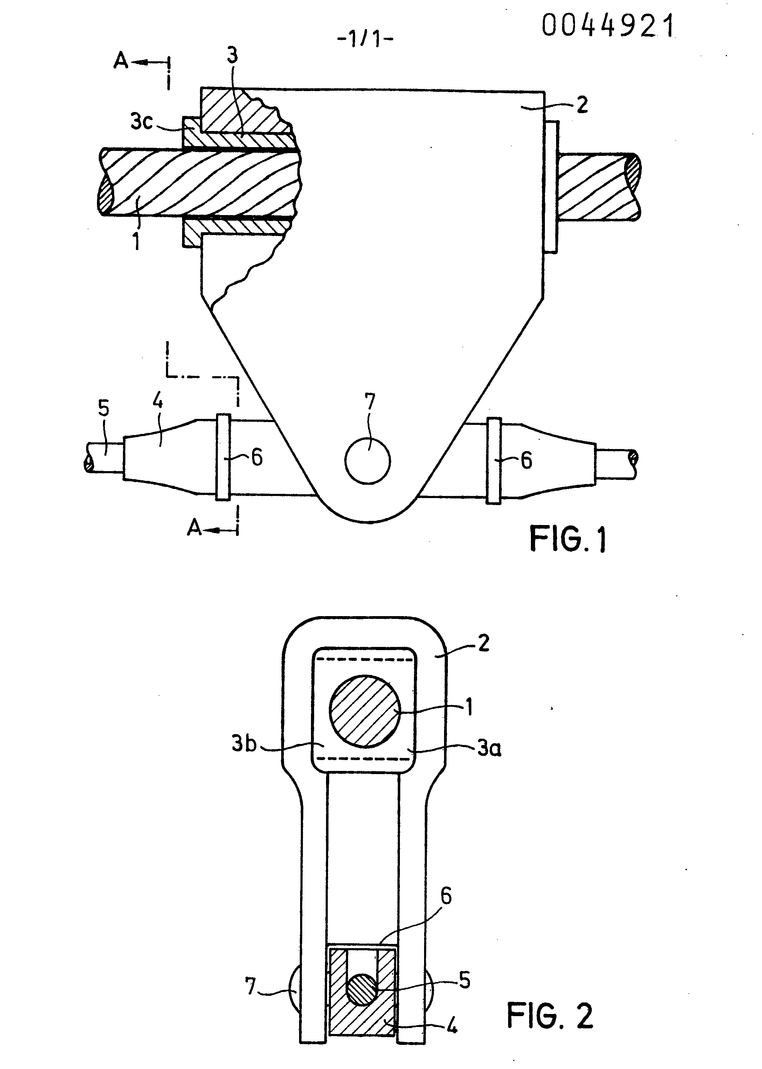

In den Figuren 1 und 2 sind gleiche Teile mit den gleichen Bezeichnungen versehen. Um das Tragseil 1, das sowohl ein Erdseil
wie auch ein Phasenseil einer Energieleitung sein kann, wird
die aus den beiden gleichen Teilen 3a und 3b bestehende Gleiteinlage 3 gelegt. Darüber wird der U-förmige Bügel 2 geschoben,
der die Teile 3a und 3b zusammenhält, wobei die flanschförmigen
Ansätze 3c die Gleiteinlage 3 formschlüssig im Bügel 2 festhalten. Der Innendurchmesser der Gleiteinlage 3 wird so groß
gewählt, daß die Einlage 3 leicht auf dem Seil 1 gleiten kann.
Die Gleiteigenschaften der Einlage 3 werden noch dadurch verbessert, daß diese aus einem geeigneten Kunststoff, vorzugsweise aus Tetrafluorkohlenstoff gefertigt ist, einem Werkstoff,
der auch unter dem geschützten Warenzeichen "Teflon" im Handel
ist. Nach dem Aufsetzen des U-förmigen Bügels 2 auf das Seil 1
wird die Trageklemme 4, die ebenfalls U-förmigen Querschnitt
hat, über das Luftkabel 5 geschoben und auf diesem mit Klemmbändern 6 befestigt. Danach werden die Schenkel des elastischen
Bügels 2 soweit auseinander gespreizt, daß die in ihnen befindlichen Löcher in die bolzenförmigen Ansätze 7 der Trageklemme 4 eingreifen. Nach der Montage einer gewünschten Anzahl
von Aufhängungen kann das Luftkabel 5 an einem Zugseil zum nächsten
Mast gezogen werden, wobei es die montierten Aufhängungen längs
des Trageseils 1 mit sich zieht. Je nach der Ausführung des Luftkabels wird man Befestigungsabstände zwischen den Aufhängungen
von 10 bis 30 m einstellen. Es ist erkennbar, daß die beschriebene Art einer Nachrüstung einer bestehenden Leiteranlage mit den
beschriebenen Aufhängungen den Verlegeaufwand und eventuelle
Flu rschäden gegenüber bekannten Aufhängungen weitgehend verringert.

Fl 4571                           1                        14.07.80

Ansprüche:

1. Aufhängung eines Luftkabels an einem an Tragmasten befestigten
   Seil einer Freileitung, an dem das Luftkabel girlandenartig
   aufgehängt ist, mit einem das tragende Seil U-förmig umfassenden einteiligen Bügel, in dessen Schenkeln eine Trageklemme für das Luftkabel schwenkbar gelagert ist,    d a -
   d u r c h    g e k e n n z e i c h n e t, daß innerhalb des
   das tragende Seil (1) umfassenden Teils des U-förmigen
   Bügels (2) eine längsgeteilte, das Seil (1) umschließende
   Gleiteinlage (3) formschlüssig angeordnet ist, daß die
   Trageklemme (4) für das Luftkabel (5) U-förmigen Querschnitt
   hat und mit Klemmbändern (6) am Luftkabel (5) befestigt ist,
   und daß in der Mitte der Längsseiten der Trageklemme (4)
   zwei bolzenförmige Absätze (7) angeformt sind, die in entsprechende Löcher in den Schenkeln des Bügels (2) eingreifen.

2. Aufhängung nach Anspruch 1,  d a d u r c h    g e k e n n -
   z e i c h n e t, daß alle Teile der Aufhängung aus wetter-
   und strahlungs-beständigem Kunststoff bestehen.

3. Aufhängung nach Anspruch 1 oder 2,  d a d u r c h   g e -
   k e n n z e i c h n e t, daß die Gleiteinlage (3) aus
   Tetrafluorkohlenstoff besteht.

0044921

FIG. 1

FIG. 2

Europäisches Patentamt

EUROPÄISCHER RECHERCHENBERICHT

004492 1

Nummer der Anmeldung

EP 81 10 4303

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>GB - A - 475 944</u> (REDIFFUSION)<br>* Seite 2, Zeilen 20-74 *<br>-- | 1 |
| | <u>CH - A - 425 932</u> (GUMMI MAAG)<br>* Seite 1, Zeilen 40-56; Figuren 2,4,5 *<br>-- | 1,2 |
| | <u>DE - C - 698 859</u> (SIEMENS)<br>* Seite 1, Zeilen 1-30; Figuren 1,5 *<br>-- | 1,2 |
| | <u>US - A - 1 725 119</u> (WILLIAMS)<br>* Seite 1, Zeilen 55-68; Figur 2 *<br>-- | 1 |
| | <u>DE - A - 2 108 227</u> (BERGNER)<br>* Seite 4, Absatz 1; Figuren 2, 3 *<br>---- | 1 |

KLASSIFIKATION DER ANMELDUNG (Int. Cl.³)

H 02 G 7/08

RECHERCHIERTE SACHGEBIETE (Int. Cl.³)

H 02 G 7/08
7/06
7/10

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 30-10-1981 | TIELEMANS |

EPA form 1503.1  06.78